(19) Europäisches Patentamt
European Patent Office
Office européen des brevets

(11) Numéro de publication: **0 070 789**
**B1**

(12) # FASCICULE DE BREVET EUROPEEN

(45) Date de publication du fascicule du brevet: **17.02.88**

(51) Int. Cl.[4]: **C 10 B 53/00**, C 10 J 3/08, B 09 B 3/00, H 01 B 15/00

(21) Numéro de dépôt: **82420098.4**

(22) Date de dépôt: **13.07.82**

(54) **Procédé de destruction de produits à base de matières organiques contenant du soufre et/ou des halogènes et/ou des métaux toxiques et applications de celui-ci.**

(30) Priorité: **20.07.81 FR 8114222**

(43) Date de publication de la demande: **26.01.83 Bulletin 83/4**

(45) Mention de la délivrance du brevet: **17.02.88 Bulletin 88/7**

(84) Etats contractants désignés: **AT BE CH DE FR GB IT LI LU NL SE**

(56) Documents cités:
EP - A - 0 024 250
WO - A - 80/02116
FR - A - 2 109 927
FR - A - 2 156 050
FR - A - 2 274 675
FR - A - 2 452 965
GB - A - 1 351 448
US - A - 3 164 545
US - A - 3 252 774
US - A - 3 440 164
US - A - 3 553 279
US - A - 3 778 320
US - A - 4 276 153

(73) Titulaire: **CIRTA Centre International de Recherches et de Technologies Appliquées, Domaine de Clairval Boîte postale 75, F-74160 Collongés-sous-Salève (FR)**

(72) Inventeur: **Bienvenu, Gérard, Sevraz, F-74250 Viuz-En-Sallaz (FR)**
Inventeur: **Regnault, Alain, Villard Tacon Ornex, F-01210 Ferney-Voltaire (FR)**
Inventeur: **Tournier, Hervé, Le Riondet, F-74520 Valleiry (FR)**
Inventeur: **Dubuc, Dominique, Route Nationale, F-74380 Bonne-Sur-Menoge (FR)**

(74) Mandataire: **Moinas, Michel, Cabinet Michel Moinas 13 Chemin du Levant, F-01210 Ferney-Voltaire (FR)**

EP 0 070 789 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne le traitement par pyrolyse de produits liquides d'origine pétrolière contenant du soufre et/ou des halogènes en vue de les éliminer. L'élimination des métaux toxiques est également concernée.

Dans les procédés de pyrolyse classique, les produits sont soumis à un chauffage en l'absence d'air, dans un four tournant, entre 600 et 800 °C. Des améliorations leur ont été apportées, par exemple en introduisant dans le tambour des billes de céramique préchauffées. Mais ils présentent toujours des difficultés au niveau de la séparation des produits de la pyrolyse (noir de carbone, huile).

Certains procédés de pyrolyse en bains de sels fondus ont été étudiés et proposés. Les sels sont généralement des chlorures, du type par exemple LiCL, KCL ou $ZnCl_2$ et des mélanges de carbonates alcalins ($K_2CO_3$, $Na_2CO_3$) contenant diverses proportions de sulfates, sulfures et sulfites. Cette technique a l'avantage de permettre un excellent transfert de chaleur et de fixer les halogènes et le soufre, que le but de l'opération soit la production d'un combustible gazeux ou liquide proposé (FR 2 109 927, FR 2 274 675, FR 2 452 965) ou la destruction de déchets hautement toxiques mais thermiquement très stables comme les chlorobiphényles (WO 80.100230).

Dans US-A-3 440 164, plus spécifiquement consacré aux hydrocarbures liquides, la pyrolyse intervient dans un bain de sels alcalins fondus en présence d'un gaz contenant de l'oxygène et d'une quantité d'eau comprise entre 5 et 30% en poids du total.

US-A-3 164 545 décrit un procédé de même nature que celui indiqué ci-dessus, en donnant plus de détails quant à l'importance de la présence d'eau.

L'invention a pour objet de remédier à certains inconvénients des techniques de pyrolyse reposant sur l'emploi des sels fondus connus, tout en conservant le principal avantage, à savoir un transfert thermique très rapide, auquel s'ajoute une capacité de complexation des atomes indésirables.

Au contraire de ce qui est indiqué précédemment, la pyrolyse se fait essentiellement en absence d'eau, selon l'invention qui concerne donc un procédé de traitement de produits liquides d'origine pétrolière contenant du soufre et/ou des halogènes pour obtenir des produits essentiellement liquides exempts de soufre et/ou d'halogènes; on procède à une pyrolyse dans un bain de sels fondus essentiellement exempt d'eau et constitué d'un ou plusieurs composés choisis parmi les hydroxydes et oxydes alcalins et alcalino-terreux, à une température comprise entre 170 °C et 550 °C.

Par «soufre» et/ou «halogène», on entend désigner ces éléments quel que soit leur degré d'oxydation, soufre ou halogènes élémentaires (degré d'oxydation 0) aussi bien que soufre et halogènes radicalaires ou ioniques (sulfures, polysulfures minéraux ou organiques, halogènures minéraux ou organiques, hypohalogénures, etc.).

Les halogènes sont classiquement le fluor, le chlore, le brome et l'iode.

Par métaux toxiques ou corrosifs, on entend désigner les métaux franchement toxiques ou simplement corrosifs appartenant notamment aux colonnes III, IV, V, VI, VIII de la classification périodique de Mendeleev quel que soit leur degré d'oxydation, c'est-à-dire qu'ils soient présents sous forme de métaux libres, d'oxydes, de sels métalliques, de sels d'acides organiques (savons de métaux lourds) ou de complexes organométalliques (acétylacétonates, benzoylacétonates, éthylènesalicylamidines, éthylènenaphtaldimines, phtalocyanines, porphyrines, etc.)

Les métaux particulièrement concernés, susceptibles de réagir avec des oxydes, des hydroxydes et le cas échéant les carbonates de métaux alcalins et alcalino-terreux pour donner des sels simples ou complexes solubles dans les bains de sel à l'état fondu sont par exemple le vanadium, l'étain, le plomb, le bismuth, l'antimoine.

Le bain est donc constitué d'un ou plusieurs composés choisis parmi les hydroxydes et les oxydes de métaux alcalins et alcalino-terreux. Citons en particulier NaOH, KOH, LiOH, CaO. Dans le cas des mélanges, il est avantageux d'employer des mélanges eutectiques.

Le bain peut contenir aussi des carbonates ou bicarbonates alcalins et alcalino-terreux tels que $Na_2CO_3$, $K_2CO_3$, seuls ou en mélange, et avantageusement en mélanges eutectiques avec les hydroxydes et/ou oxydes.

Le bain peut contenir, en quantités pouvant même être prépondérantes, d'autres composés encore, dont la seule présence est de favoriser l'homogénéité du bain ou d'abaisser son point de fusion par phénomène eutectique. Il s'agit par exemple d'halogènures et de sulfates.

La température du bain nécessaire à la pyrolyse est généralement comprise entre 170° et 550 °C, la température minimale correspondant à l'eutectique KOH/NaOH.

A chaque traitement on s'assure que la quantité de composé actif est de l'ordre de 1 à 5 litres par kilogramme de charge, avec une quantité suffisante pour solubiliser tout le soufre et/ou les halogènes et/ou les métaux de la charge. Il peut d'ailleurs être ajouté dans le bain de pyrolyse en continu, au fur et à mesure de sa consommation par réaction avec le soufre et/ou les halogènes.

La réactivité chimique des oxydes et des hydroxydes alcalins et alcalino-terreux purs ou en mélange avec des carbonates permet de fixer le soufre, les halogènes et certains métaux dès 200 °C. Dans les conditions opératoires comprises entre 200 et 550 °C, les pyrolysats sont essentiellement constitués d'une huile dépourvue d'halogènes et de soufre, et dont la teneur en métaux a été abaissée de façon significative. Une fraction gazeuse peut être obtenue de l'ordre de 10%. L'huile est récupérée par distillation à pression atmosphérique ou sous pression réduite, par débordement en raison de sa densité inférieure à celle

du bain de sel ou par entraînement au moyen d'un courant gazeux.

Le bain ayant une excellente conductibilité thermique et les échanges de chaleur étant immédiats, la cinétique de décomposition est de 10 à 20 fois plus rapide que dans des fours conventionnels, tout en étant de plus homogène.

Le bain est avantageusement constitué d'un ou plusieurs hydroxydes (NaOH, KOH, LiOH par exemple) avec éventuellement un ou plusieurs carbonates. En variante, on utilise un de ces composés en mélange avec des halogènures alcalins et/ou alcalino-terreux. La proportion de composé actif par rapport aux halogènures est de préférence comprise entre 1 et 60% en poids, par exemple de 10 à 30%. En pratique, on utilise des halogènures tels que NaCl, NaF, KCl, $CaCl_2$, $CaF_2$, seuls ou en mélanges dans les limites de miscibilité.

Il est avantageux de régénérer périodiquement le bain par insufflation d'air et de fumée de combustion, ce qui donne lieu à la réaction

$$Na_2S + CO_2 + {}^3/_2O_2 \rightarrow Na_2CO_3SO_2$$

lequel est fixé sous forme de sulfite.

En représentant l'halogène par X, la réaction de pyrolyse peut se schématiser, dans le cas de l'oxyde de calcium, avec les mêmes conventions que précédemment:

$$CaO + 2X + C \rightarrow CaX_2 + CO$$

Remarquons que $CaX_2$ est généré à partir de CaO, ce qui va donc dans le sens d'une meilleure dissolution de celui-ci. En pratique, on travaille avec une teneur de l'ordre de 10% en poids qu'on maintient sensiblement constante par addition de CaO au fur et à mesure de sa consommation et de sa transformation en $CaX_2$.

Dans le cas des hydroxydes alcalins (NaOH, KOH, LiOH), les réactions sont plus complexes et dépendent de la température et de la nature des produits halogènes formés lors de la pyrolyse.

Quand la matière organique contient à la fois du soufre et des halogènes, on travaille selon le système hydroxyde ou selon le système oxyde, avec ou sans carbonate.

En représentant le métal par Me (plus particulièrement vanadium, plomb, étain, antimoine) la pyrolyse ou le craquage conduit à la formation d'une série de sels complexes de formule générale:

$$Me_xOy,\ 3Na_2O \text{ et } Me_xOy,\ 3CaO$$

pour les deux séries les plus courantes. Ces sels sont connus sous les noms de vanadates, plombates, stanates et antimonates respectivement.

Par exemple dans le cas du vanadium, la nature exacte du vanadate dépend des conditions de réaction et conduit à trois sels, à savoir orthovanadate, pyrovanadate et métavanadate, ce dernier étant le plus stable dans les conditions d'opération envisagées; on peut écrire schématiquement ces réactions de la façon suivante:

$$V_2O_5 + 3Na_2CO_3 \rightarrow 2Na_3VO_4 + 3CO_2$$
(orthovanadates)

$$V_2O_5 + 2Na_2O \rightarrow Na_4V_2O_7$$
(pyrovanadates)

$$V_2O_5 + Na_2O \rightarrow 2NaVO_3$$
(métavanadates)

Lorsque le vanadium se trouve sous forme de complexe telle qu'une porphyrine vanadiée, stable thermiquement presque vers 400 °C et dans laquelle le vanadium se trouve sous forme d'anion vanadyle $VO^{2-}$, il importe de déstabiliser le complexe par chauffage vers 500 °C puis de ménager, par une admission d'air contrôlée, l'oxydation du vanadium au niveau V (oxyde vanadique $V_2O_5$) pour permettre la réaction de formation des vanadates.

L'exemple suivant illustre l'invention.

Exemple

Pour le traitement de démétallisation des résidus de distillation sous vide de pétrole ou de bruts lourds à haute teneur en métaux (nickel, vanadium) on procède de la façon suivante:

1) Fusion du bain de sels fondus constitué de $NaOH/KOH/Na_2CO_3/K_2CO_3$, maintenu à 450 °C.

2) Introduction du résidu de distillation sous vide d'arabe léger préalablement préchauffé vers 100 °C et ayant les caractéristiques suivantes:

| | |
|---|---|
| nickel: | 30 ppm |
| vanadium: | 97 ppm |
| viscosité à 100 °C: | 471 centistokes |
| carbone Conradson: | 18% |
| asphaltène: | 3,9% |

l'introduction du résidu pétrolier est réalisé au moyen d'un gaz vecteur inerte tel que l'azote, ce qui permet de maintenir un bon contact entre le produit pétrolier et le bain de sels fondus, et de faciliter la récupération du produit craqué et démétallisé.

On récupère une fraction pétrolière (environ 85% en poids du résidu pétrolier introduit) ayant les caractéristiques suivantes:

| | |
|---|---|
| nickel: | 2 ppm |
| vanadium: | 3 ppm |
| viscosité à 100 °C: | 8 centistokes |
| carbone Conradson: | 4% |
| asphaltène: | 0,1% |

Le vanadium présent dans le résidu de distillation est dosé sous forme de vanadate dans le mélange de carbonate et d'hydroxydes. Le nickel se répartit entre la couche carbonée cokéfiée qui surnage au-dessus du bain de sel (environ 70% en poids du résidu pétrolier introduit) et le bain de sel proprement dit.

**Revendications**

1. Procédé de traitement de produits liquides d'origine pétrolière contenant du soufre et/ou des halogènes pour obtenir des produits essentiellement liquides exempts de soufre et/ou d'halogènes, caractérisé par le fait qu'on procède à une

pyrolyse dans un bain de sels fondus essentiellement exempt d'eau et constitué d'un ou plusieurs composés choisis parmi les hydroxydes et oxydes alcalins et alcalino-terreux, à une température comprise entre 170 °C et 550 °C.

2. Procédé selon la revendication 1, caractérisé par le fait que le bain est constitué de NaOH, KOH, LiOH et/ou CaO.

3. Procédé selon la revendication 1, caractérisé par le fait que le bain comprend des carbonates ou bi-carbonates alcalins et/ou alcalino-terreux.

4. Procédé selon la revendication 1 ou 3, caractérisé par le fait que le bain comprend des halogénures alcalins et/ou alcalino-terreux et/ou des sulfates alcalins.

5. Procédé selon la revendication 2, 3 ou 4, caractérisé par le fait que le bain est un mélange eutectique.

6. Procédé selon la revendication 5, caractérisé en ce que le bain et le mélange eutectique KOH/NaOH a un point de fusion de 170 °C.

7. Procédé selon la revendication 1, caractérisé en ce que la composition du bain est maintenue sensiblement constante.

8. Procédé selon la revendication 1, caractérisé en ce que le produit liquide est introduit dans le bain au moyen d'un gaz vecteur inerte.

9. Application du procédé selon la revendication 1 à la démétallisation des pétroles et bruts lourds riches en métaux toxiques ou corrosifs.

10. Application du procédé selon la revendication 1 à la régénération des huiles de vidange.

**Claims**

1. Process for the treatment of liquid products of mineral oil origin containing sulphur and/or halogens for the obtaining of essentially liquid products free of sulphur and/or halogens, characterised in that one carries out a pyrolysis in a molten salt bath essentially free of water and consisting of one or more compounds selected from the alkali metal and alkaline earth metal hydroxides and oxides at a temperature between 170 and 550 °C.

2. Process according to claim 1, characterised in that the bath consists of NaOH, KOH, LiOH and/or CaO.

3. Process according to claim 1, characterised in that the bath contains alkali metal and/or alkaline earth metal carbonates or bicarbonates.

4. Process according to claim 1 or 2, characterised in that the bath contains alkali metal and/or alkaline earth metal halides and/or alkali metal sulphates.

5. Process according to claim 2, 3 or 4, characterised in that the bath is a eutectic mixture.

6. Process according to claim 5, characterised in that the bath and the eutectic mixture of KOH/NaOH has a melting point of 170 °C.

7. Process according to claim 1, characterised in that the composition of the bath is kept substantially constant.

8. Process according to claim 1, characterised in that the liquid product is introduced into the bath by means of an inert carrier gas.

9. Use of the process according to claim 1 for demetallisation of petroleum and crudes very rich in toxic and corrosive metals.

10. Use of the process according to claim 1 for the regeneration of sump oils.

**Patentansprüche**

1. Verfahren zur Verarbeitung von schwefel- und/oder halogenhaltigen flüssigen Erdölerzeugnissen zur Erzielung im wesentlichen flüssiger, schwefel- und/oder halogenfreier Produkte, dadurch gekennzeichnet, dass in einem Bad aus geschmolzenen Salzen, welches im wesentlichen wasserfrei ist und aus einer oder mehreren Verbindungen aus alkalischen und erdalkalischen Hydroxyden und Oxyden gebildet wird, bei einer Temperatur zwischen 170 °C und 550 °C eine Pyrolyse vorgenommen wird.

2. Verfahren gemäss Anspruch 1, dadurch gekennzeichnet, dass das Bad aus NaOH, KOH, LiOH und/oder CaO gebildet wird.

3. Verfahren gemäss Anspruch 1, dadurch gekennzeichnet, dass das Bad alkalische und/oder erdalkalische Karbonate oder Bikarbonate enthält.

4. Verfahren gemäss Anspruch 1 oder 3, dadurch gekennzeichnet, dass das Bad Alkali- und/oder Erdalkalihalogenide und/oder Alkalisulfate enthält.

5. Verfahren gemäss Anspruch 2, 3 oder 4, dadurch gekennzeichnet, dass das Bad ein eutektisches Gemisch ist.

6. Verfahren gemäss Anspruch 5, dadurch gekennzeichnet, dass das Bad und das eutektische Gemisch KOH/NaOH einen Schmelzpunkt von 170 °C hat.

7. Verfahren gemäss Anspruch 1, dadurch gekennzeichnet, dass die Zusammensetzung des Bades merklich konstant gehalten wird.

8. Verfahren gemäss Anspruch 1, dadurch gekennzeichnet, dass das flüssige Produkt mittels eines inerten Traggases in das Bad eingebracht wird.

9. Anwendung des Verfahrens gemäss Anspruch 1 auf das Entmetallisieren von an giftigen oder korrosiven Metallen reichem Rohöl oder Heizöl S.

10. Anwendung des Verfahrens gemäss Anspruch 1 auf die Regeneration von Ablassöl.